# EUROPÄISCHE PATENTSCHRIFT

(11) **EP 0 773 300 B1**
(45) Veröffentlichungstag und Bekanntmachung des Hinweises auf die Patenterteilung: **15.09.1999**
(21) Anmeldenummer: 96116605.5
(22) Anmeldetag: 16.10.1996
(51) Int. Cl.: C22B 1/248, C22B 1/00, C21C 5/56

(54) **Verfahren zum Einschmelzen von Schrott**
Scrap melting method
Procédé pour la fusion de ferraille

(30) Priorität: 18.10.1995 DE 19538608
(43) Veröffentlichungstag der Anmeldung: 14.05.1997
(73) Patentinhaber: Aicher, Max, Dipl.-Ing., D-83395 Freilassing (DE)
(72) Erfinder: Aicher, Max, Dipl.-Ing., D-83395 Freilassing (DE)
(74) Vertreter: Patentanwälte Möll und Bitterich

(56) Entgegenhaltungen:
- EP-A- 0 275 816
- EP-A- 0 435 849
- DE-A- 2 811 352
- DE-A- 3 807 812
- GB-A- 1 122 607
- GB-A- 1 272 379
- "Vom Schrott zu Stahl", VERLAG Stahleisen Düsseldorf 1977, Seiten 47-52

## Beschreibung

Die Erfindung betrifft ein Verfahren zum Einschmelzen von Schrott.

Es ist bekannt, Schrott in Elektroöfen, insbesondere in Lichtbogenöfen, oder Hochöfen wieder zu Stahl einzuschmelzen. Lichtbogenöfen werden in der Regel zu 100 %, Hochöfen nur etwa zu 10 % mit Schrott beschickt. Dabei kann der Schrott entweder lose oder, insbesondere im Falle von Autowracks, zu Paketen gepreßt in diese Öfen eingebracht werden.

In Lichtbogenöfen wird der Schrott durch die Energie des Lichtbogens bei etwa 4.500 bis 6.000 Grad C eingeschmolzen. Dabei werden bei Beginn des Einschmelzvorganges durch die Elektroden zunächst Säulen in das Schmelzgut gebrannt; anschließend wird der umgebende Bereich geschmolzen. Zur Bildung des Lichtbogens ist ein elektrischer Kontakt mit dem Schmelzgut nötig. Die Regelung der Elektroden ist daher so ausgelegt, daß durch ständige Auf- und Abbewegung der Elektroden der für den Kontakt nötige Abstand zum Schmelzgut gehalten wird.

Sind im Schrott nichtleitende Fremdstoffe enthalten, wie z.B. Holz, Beton, nichtmetallische Teile von Autowracks, z.B. Polster, Reifen, Kunststoffe usw., dann besteht die Gefahr von Brüchen der Graphitelektroden, da die Elektrodenregelung die Elektroden an solchen Teilen aufsitzen läßt bzw. gegen diese drückt.

Schrottpakete, zu denen Autokarossen, aber auch Dosen und anderer Schrott, wie z.B. Müllschrott, gepreßt werden, haben regelmäßig die Form von Quadern oder Würfeln mit ebenen Flächen, Ecken und Kanten. Entscheidend für die Einsatzmöglichkeiten in den einzelnen Stahlerzeugungsaggregaten ist die Materialart und die Paketgröße. Dabei sind die gebräuchlichsten Paketmaße 30 x 30 x 30 cm und 40 x 40 x 60 cm für die Gießereiindustrie und 60 x 60 x 150 cm für die Stahlindustrie ("Vom Schrott zum Stahl", Verlag Stahleisen Düsseldorf, 1977, S. 48).

Vor allem bei Autokarossen sind die Abmessungen dieser quaderförmigen Pakete so gewählt, daß sie noch auf Lkw straßenverfahrbar transportiert werden können, z.B. 60 x 100 x 140 cm. Bei Autokarossen ist es auch üblich, die Karossen nur "flachzudrücken", um sie kostengünstig transportieren zu können. Diese "Pakete" müssen aber, wenn sie nicht ohnehin für eine Weiterverarbeitung im Shredder vorgesehen sind, vor einem Einsatz im Stahlwerk weiter verpreßt werden.

Bei Einsatz von zu Paketen verpreßten Fahrzeugwracks ist es auch bekannt, diese vor der Aufgabe in den Schrotteinschmelzprozeß einer Schneideinrichtung zuzuführen, durch die die Preßpakete zu Platten mit über ihre Fläche unterschiedlicher Stärke geschnitten werden (EP 0 435 849 A1). Hierdurch soll die Diffusion von Schadstoffen begünstigt werden, die wegen der geringeren Schichtdicke leichter über die Gasphase ausgetragen werden.

Schließlich ist es bei der Aufbereitung von in Form von Spänen und/oder Schleifstäuben anfallenden Stahlabfällen bekannt, die nassen Stahlabfälle zu Preßlingen von mindestens 1 cm³ Rauminhalt und einer Dichte von mindestens 2,5 g/m³ zu verdichten (EP 0 275 816 A1).

Bei quader- und würfelförmigen Paketen besteht die Gefahr, daß sie sich in den Öfen flächig berühren. Dadurch wird nicht nur die Durchgasung des zu erschmelzenden Gutes erschwert, die für eine Verbrennung der organischen Bestandteile erforderlich ist, sondem es können auch "Türme" gebildet werden, die einstürzen können und somit die Gefahr von Elektrodenbrüchen hervorrufen.

Die Gefahr von Elektrodenbrüchen besteht auch bei Schrottpaketen aus Autowracks, wenn diese nichtmetallische Teile wie Polster, Reifen, Kunststoffteile oder dergleichen enthalten, weil auch dann der elektrische Kontakt der Elektroden zu den metallischen Teilen verlorengehen kann.

Es ist zwar auch schon bekannt, Kühlschrott aus annähernd kugelförmigen Metallstücken zu bilden (DE 38 07 812 A1). Diese kugelförmigen Metallstücke haben aber für die besondere Einsatzweise Größen zwischen 12 und 60 mm und weisen einen Kugelformfaktor B mit einem Mindestwert von 0,57 auf.

Zur Vermeidung der Nachteile quader- oder würfelförmiger Pakete wird erfindungsgemäß vorgeschlagen, den Schrott, insbesondere Autowracks, in Pakete von Kugelform mit einem mittleren Durchmesser von etwa 60 bis 80 cm zu pressen und in dieser Form in einen Schmelzofen, insbesondere einen Lichtbogenofen, einzugeben.

Hierdurch werden Vorteile in verschiedener Hinsicht erzielt.

Ein Vorteil der Erfindung besteht darin, daß bei minimaler Oberfläche der Pakete eine maximale Dichte erreichbar ist. Damit kann ein Lichtbogenofen intensiver beschickt werden, so daß sich der Aufwand pro Charge und Zeiteinheit verringert und damit auch eine Energieersparnis eintritt.

Der Hauptvorteil der Erfindung aber wird darin gesehen, daß durch die Anwendung radialsymmetrischen Drucks, wie es für eine Verformung zu einer Kugel erforderlich ist, eine höhere Verdichtung möglich ist; anzustreben ist ein Raumgewicht von mindestens 1,5 t/m³. Diese höhere Verdichtung führt dazu, daß nichtleitende, organische Teile wie Kunststoffe, Schäume usw. eine starke Volumenverminderung erfahren, so daß es seltener zu einer Kontaktunterbrechung des Lichtbogens kommt. Es ist deshalb nach der Erfindung möglich, auch relativ preiswerte, teilweise mit organischen Stoffen verunreinigte Schrottsorten vorteilhaft einzusetzen, wobei sich diese organischen Stoffe "thermisch entsorgen" lassen, ohne Deponievolumen zu beanspruchen.

Kugelförmige Pakete lassen sich aufgrund ihrer größeren Dichte in Lichtbogenöfen als Schwerschrott am Boden chargieren, so daß man unter Einsatz von unverdichtetem Mischschrott im mittleren und unverdichtetem Leichtschrott im oberen Bereich zu einem insgesamt wirtschaftlicheren Schmelzvorgang kommt.

Schließlich besteht ein Vorteil darin, daß zwischen derart kompakten kugelförmigen Paketen mehr oder weniger definierte Zwischenräume in Form von Zwickeln verbleiben, so daß immer eine definierte Durchgasung des zu erschmelzenden Gutes gewährleistet ist. Schließlich wird durch die abgerundete Form der Pakete die Gefahr von mechanischen Beschädigungen der Ofenwand beim Chargiervorgang minimiert.

Bei bestimmten Schrottsorten, wie z.B. Federstahl oder federstahlartige Materialien, besteht ein Problem darin, daß diese sich auch durch Anwendung hohen Druckes nicht so zusammenpressen lassen, daß der erfindungsgemäß angestrebte hohe Verdichtungsgrad bleibend erreichbar ist.

Ein weiteres Merkmal der Erfindung besteht deshalb darin, den Schrott im Sinne eines Weichglühens thermisch zu behandeln. Diese thermische Behandlung erfolgt zweckmäßigerweise durch Induktion.

Diese thermische Behandlung kann vor dem Preßvorgang, aber auch zugleich mit diesem vorgenommen werden. Sie hat zur Folge, daß die Elastizitätsgrenze des Stahles so verändert wird, daß die gewünschte hohe Verdichtung erreicht wird und auf Dauer, zumindest bis zur Eingabe in den Ofen, erhalten bleibt.

## Patentansprüche

1. Verfahren zum Einschmelzen von Schrott, bei dem der Schrott, insbesondere Autowracks, in Pakete von Kugelform mit einem mittleren Durchmesser von etwa 60 bis 80 cm gepreßt und in dieser Form in einen Schmelzofen, insbesondere einen Lichtbogenofen, eingegeben wird.

2. Verfahren nach Anspruch 1, dadurch gekennzeichnet, daß die Schrottpakete ein Raumgewicht von mindestens 1,5 t/m³ aufweisen.

3. Verfahren nach Anspruch 1 oder 2, dadurch gekennzeichnet, daß der Schrott vor und/oder während des Preßvorganges im Sinne eines Weichglühens thermisch behandelt wird.

4. Verfahren nach Anspruch 3, dadurch gekennzeichnet, daß die thermische Behandlung mittels Induktion erfolgt.

## Claims

1. A method of smelting scrap, in which the scrap, in particular scrap motorcars, are compressed into bales of spherical shape with an average diameter of approximately 60 to 80 cm and in this form are fed into a smelting furnace, in particular an arc furnace.

2. A method according to Claim 1, characterised in that the scrap bales have a mass density of at least 1.5 t/m³.

3. A method according to Claim 1 or 2, characterised in that the scrap is treated thermally, for the purpose of soft annealing, before and/or during the compressing operation.

4. A method according to Claim 3, characterised in that the thermal treatment is carried out by induction.

## Revendications

1. Procédé de fusion de ferraille, au cours duquel de la ferraille, en particulier des déchets de véhicules, sont compactés sous la forme de paquets sphériques ayant un diamètre moyen d'environ 60 à 80 cm et sont introduits sous cette forme dans un four de fusion, en particulier un four à arc.

2. Procédé selon la revendication 1, caractérisé en ce que les paquets de ferraille présentent une masse volumique d'au moins 1,5 t/m³.

3. Procédé selon la revendication 1 ou 2, caractérisé en ce que la ferraille subit un traitement thermique, pris au sens d'un recuit, avant et/ou pendant le cycle de pressage.

4. Procédé selon la revendication 3, caractérisé en ce que le traitement thermique est réalisé par induction.
